(19) Europäisches Patentamt / European Patent Office / Office européen des brevets

(11) **EP 2 990 495 A1**

(12) **EUROPEAN PATENT APPLICATION**
published in accordance with Art. 153(4) EPC

(43) Date of publication:
02.03.2016 Bulletin 2016/09

(51) Int Cl.:
*C22B 23/00* (2006.01)    *C22B 3/00* (2006.01)
*C22B 3/04* (2006.01)    *C22B 34/32* (2006.01)

(21) Application number: 14789088.3

(22) Date of filing: 14.04.2014

(86) International application number:
PCT/JP2014/060611

(87) International publication number:
WO 2014/175093 (30.10.2014 Gazette 2014/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 23.04.2013 JP 2013090798

(71) Applicant: Sumitomo Metal Mining Co., Ltd.
Tokyo, 105-8716 (JP)

(72) Inventors:
• OHARA Go
Tokyo 105-8716 (JP)

• SASAKI Hideki
Tokyo 105-8716 (JP)
• KAN Yasumasa
Tokyo 105-8716 (JP)
• IMAMURA Masaki
Tokyo 105-8716 (JP)

(74) Representative: Tranter, Andrew David
Barker Brettell LLP
100 Hagley Road
Edgbaston
Birmingham B16 8QQ (GB)

(54) **HYDROMETALLURGY METHOD FOR NICKEL OXIDE ORE**

(57) Provided is a hydrometallurgical process for nickel oxide ore using high pressure acid leaching to be capable of achieving improvement of durability of production facilities, simplification of the production facilities, suppression of the cost and environmental risks caused by compression of the volume of a tailings dam that stores wastes, and separation and recovery of impurity components which can be utilized as a resource. The hydrometallurgical process for nickel oxide ore of recovering nickel and cobalt using the high pressure acid leaching is characterized by including at least one step selected from step (A) (a step of separating and recovering chromite particles), step (B-1) (a step of neutralizing a leachate with a magnesium-based neutralizing agent), and step (B-2) (a step of neutralizing a leach residue slurry with the magnesium-based neutralizing agent).

FIG.1

EP 2 990 495 A1

**Description**

TECHNICAL FIELD

The present invention relates to a hydrometallurgical process for nickel oxide ore, and relates to a hydrometallurgical process for nickel oxide ore of recovering nickel and cobalt from nickel oxide ore by a high pressure acid leaching that includes an ore processing step, a leaching step, a solid-liquid separation step, a neutralization step, a zinc removal step, a sulfurization step and a final neutralization step. The hydrometallurgical process can achieve the tasks of suppressing the abrasion of facilities such as piping and pumps caused by the ore slurry produced from the ore processing step, increasing durability, reducing the amount of a final neutralized residue produced from the final neutralization step, and suppressing the cost and environmental risks by compressing the volume of the tailings dam that stores the leaching residue that will be disposed, neutralized precipitate, and the like, and also enables separation and recovery of impurity components that can be effectively utilized by recycling.

BACKGROUND ART

In recent years, as a result of further progress in oligopolization of the rights to mining for mineral resources such as coal, iron, copper, nickel, cobalt, chromium, and manganese, the raw material cost for metal smelting is increasing to a large extent. Therefore, even for metal smelting, since it is disadvantageous in terms of cost, development of technologies for using low grade raw materials that have not been hitherto taken into consideration is underway as a measure for cost reduction.

For example, in regard to nickel smelting, materials having excellent corrosion resistance at a high temperature and a high pressure have been developed. Thus, attention has been paid to a hydrometallurgical process based on a high pressure acid leaching of subjecting nickel oxide ore to acid leaching with sulfuric acid under pressure.

The high pressure acid leaching does not include dry processes such as a reduction process and a drying process, unlike a pyrometallurgical method which is a conventional common smelting method for nickel oxide ore, and is advantageous in terms of energy and cost. Therefore, the high pressure acid leaching will be continuously considered as a promising technology as a smelting method for low grade nickel oxide ore.

Accordingly, in order to increase the level of performance as a smelting process, various suggestions have been made mainly on the leaching process at a high temperature under pressure, in connection with an increase in the leaching ratios of nickel and cobalt, solution purification of the leachate, a decrease in the amount of use of the operation materials, and the like.

Meanwhile, regarding a process of utilizing leaching at a high temperature under pressure, for example, there has been suggested a method of recovering valuable metals, such as nickel, cobalt and manganese, from oxide ores containing these metals, the method including the following steps (a) to (c) (see, for example, Patent Document 1).

Step (a) : Oxide ore that has been slurrified in advance is subjected to leaching at normal pressure under sulfuric acid condition, using a pressurized acid leachate obtained in a step (b) as illustrated below, and a normal-pressure leachate and a normal-pressure leach residue are obtained.

Step (b): The normal-pressure leach residue obtained in the step (a) is allowed to react with sulfuric acid in an oxidizing atmosphere at a high temperature and a high pressure, and thus a pressurized acid leachate is obtained.

Step (c): A neutralizing agent is added to the normal-pressure leachate obtained in the step (a) to neutralize the leachate, subsequently a sulfurized alkali compound is added thereto, and nickel and cobalt in the leachate are recovered as sulfides.

In this method, the leach rate of nickel from ore is increased by performing two-stage leaching of subjecting an ore slurry to normal-pressure leaching (step (a)), and then subjecting the normal-pressure leach residue to acid leaching under pressure (step (b)). At the same time, the excess acid contained in the leachate of pressurized acid leaching is neutralized by the alkali component contained in the normal-pressure leach residue, and the burden of the neutralization step (step (c)) is reduced.

However, due to the two-stage leaching, there is a problem that the number of facility items increases so that more cost and efforts are needed, and it requires expenses to treat a large amount of a thin solution generated at the time of washing the leach residue.

Thus, in order to solve these problems, there has been suggested a method including the steps (1) to (4) as illustrated below, as another process of utilizing leaching at a high temperature under pressure (see, for example, Patent Document 2).

(1) Leaching step: Nickel oxide ore is prepared into a slurry, sulfuric acid is added thereto, the mixture is stirred at a temperature of 220°C to 280°C, and thus a leached slurry is formed.

(2) Solid-liquid separation step: The leached slurry obtained in the previous leaching step is washed using multi-stage thickeners, and the leached slurry is separated into a leachate containing nickel and cobalt, and a leach residue.

(3) Neutralization step: The pH of the leachate obtained in the solid-liquid separation step is adjusted to 4 or less using calcium carbonate while suppressing oxidation of the leachate, a neutralized precipitate containing trivalent iron is produced, and the neutralized precipitate is separated into a neutralized precipitate slurry and a mother liquor for nickel recovery.

(4) Sulfurization step: Hydrogen sulfide gas is blown into the mother liquor for nickel recovery obtained in the neutralization step, sulfides containing nickel and cobalt are produced, and the sulfides are separated from a barren liquor.

Here, an outline of a practical plant based on the technology disclosed in Patent Document 2 will be described with reference to the drawings.

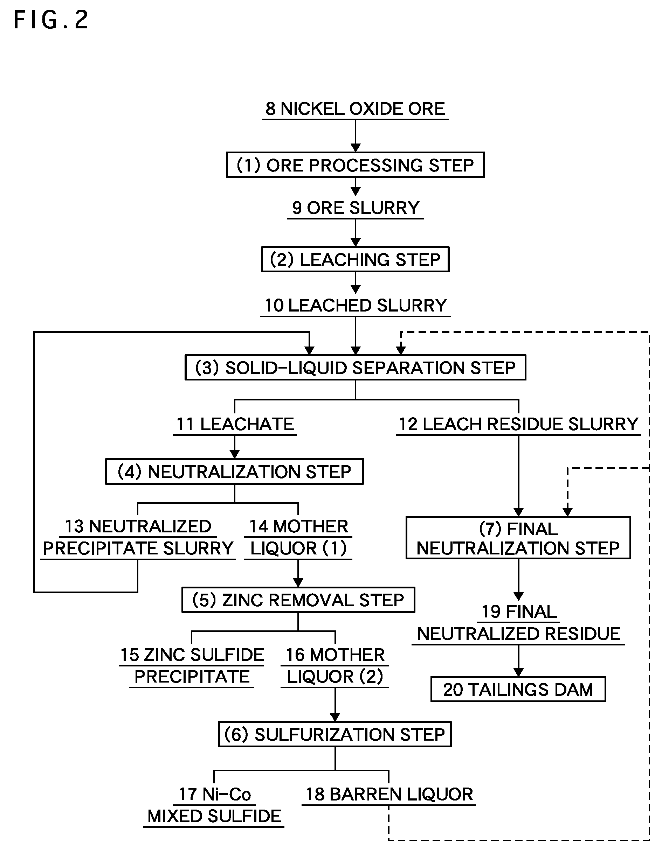

Fig. 2 is a smelting process diagram illustrating an exemplary practical plant based on the hydrometallurgical process for nickel oxide ore (Patent Document 2).

In Fig. 2, nickel oxide ore 8 is first mixed with water to form a mixed liquid, subsequently the removal of foreign material from the mixed liquid and the adjustment of ore particle size are carried out, and an ore slurry 9 is formed, in ore processing step (1).

Next, the obtained ore slurry 9 is subjected to high-temperature pressure leaching using sulfuric acid, thereby a leached slurry 10 is formed, in leaching step (2).

The leached slurry 10 obtained is subjected to solid-liquid separation step (3) to be washed in multiple stages, and then the leached slurry is separated into a leachate 11 containing nickel and cobalt, and a leach residue slurry 12.

The separated leachate 11 is subjected to neutralization step (4), and is separated into a neutralized precipitate slurry 13 containing trivalent iron hydroxide and a mother liquor (1) 14 for nickel recovery.

The mother liquor (1) 14 is subjected to zinc removal step (5) of adding a sulfurizing agent, and the mother liquor is separated into a zinc sulfide precipitate 15 containing zinc sulfide, and a mother liquor (2) 16 for nickel recovery.

Meanwhile, the mother liquor (2) 16 is subjected to sulfurization step (6), and is separated into a mixed sulfide 17 containing nickel and cobalt, and a barren liquor 18 having nickel and the like removed therefrom. The barren liquor 18 is used as washing water for the leach residue in solid-liquid separation step (3).

Finally, the leach residue slurry 12 is subjected to final neutralization step (7) together with an excess amount of the barren liquor 18, and the leach residue slurry is neutralized. A final neutralized residue 19 is stored in a tailings dam 20.

A feature of this method lies in that by washing the leached slurry in multiple stages in the solid-liquid separation step, the amount of neutralizing agent consumption and the amount of precipitate in the neutralization step can be reduced; since the true density of the leach residue can be increased, the solid-liquid separation characteristics can be improved; and the process is simplified by performing the leaching step simply by high-temperature pressure leaching. Thus, this method is considered to be advantageous against the method suggested in Patent Document 1.

Furthermore, it is believed that when such a barren liquor is used as the washing liquid used in the solid-liquid separation step, nickel adhering to the leach residue can be leached and recovered using residual sulfuric acid, and repeated use of water can be carried out effectively and efficiently.

Furthermore, when the neutralized precipitate slurry is sent to the solid-liquid separation step, the loss of nickel can be reduced, and therefore, it is believed to be more advantageous.

However, a practical plant adopting this method has the following problems.

First, suppression of abrasion of facilities is exemplified.

Although nickel oxide ore is conveyed in the form of slurry between various processes, abrasion of the facility materials is markedly accelerated by the conveyed slurry so that there occurs a high frequency of maintenance particularly in facilities such as piping and pumps in the leaching step, and this high frequency serves as a major factor for an increase in the maintenance cost and a decrease in the rate of plant operation.

Secondly, reduction of amount of final neutralized residue is exemplified.

The leach residue obtained in the solid-liquid separation step is combined with excess barren liquor produced from the sulfurization step, and the mixture is made harmless by a neutralization treatment of adding limestone slurry or a slaked lime slurry thereto.

The final neutralized residue produced from this final neutralization treatment step (hereinafter, may be referred to as final neutralization step) is stored in the tailings dam. However, the final neutralized residue contains, in addition to impurity components such as hematite and chromite in the leach residue, gypsum that is formed by the neutralization treatment so that the final neutralized residue cannot be recycled, and there is a heavy burden of expenses for the construction and maintenance management of the tailings dam.

Therefore, there has been a demand for a solution for the problems described above with regard to the practical plant using a hydrometallurgical process based on the conventional high pressure acid leaching.

Furthermore, in order to solve the problems in an effective and economically efficient manner, it is an effective measure to efficiently separate and recover impurity components that are contained in the ore or leach residue, and it is also demanded to recycle and effectively utilize these impurity components.

Thus, the applicant of the present application has suggested in Patent Document 3 a hydrometallurgical process for nickel oxide ore, which includes a step of physically separating and recovering particles containing at least one selected from silica mineral, chromite or silica-magnesia mineral from ore slurry, and a step of physically separating and recovering hematite particles in the leach residue slurry, in a hydrometallurgical process based on a high pressure acid leaching. However, improvements have been further needed for efficient separation and recovery of impurity components contained in ore or leach residue.

CITATION LIST

PATENT DOCUMENTS

Patent Document 1: JP 6-116660 A
Patent Document 2: JP 2005-350766 A
Patent Document 3: JP 2010-95788 A

SUMMARY OF THE INVENTION

TECHNICAL PROBLEM

Under such circumstances, the invention was achieved in view of the problems of the conventional technologies, and it is an object of the invention to provide a hydrometallurgical process for nickel oxide ore of recovering nickel and cobalt using a high-pressure acid leaching that includes an ore processing step, a leaching step, a solid-liquid separation step, a neutralization step, a zinc removal step, a sulfurization step, and a final neutralization step. The hydrometallurgical process can achieve the tasks of suppressing the abrasion of facilities such as piping and pumps caused by the ore slurry produced from the ore processing step, increasing durability, increasing the solid content ratio of the ore slurry, simplifying the facilities of the ore processing step, reducing the amount of a final neutralized residue produced from the final neutralization step, and suppressing the cost and environmental risks by compressing the volume of the tailings dam that stores the leaching residue that will be disposed, neutralized precipitate, and the like, and also enables separation and recovery of impurity components, such as chromite and hematite, that can be effectively utilized by recycling.

SOLUTION TO PROBLEMS

In order to achieve the object described above, the inventors of the invention conducted extensive investigations on the solution for the problems described above, in connection with a hydrometallurgical process for recovering nickel and cobalt from nickel oxide ore by a high pressure acid leaching that includes an ore processing step, a leaching step, a solid-liquid separation step, a neutralization step, a zinc removal step, a sulfurization step, and a final neutralization step. As a result, the inventors carried out at least one step selected from step (A) of separating and recovering, by a particular method, particles containing chromite in an ore slurry produced from an ore processing step; and step (B) of performing, after the step (A), and after a leaching step and a solid-liquid separation step, neutralization by a particular method that does not produce gypsum, and recovering the metals, and the inventors found that this method is effective as a solution for the problems described above, thus completing the invention.

That is, according to a first aspect of the invention, there is provided a hydrometallurgical process for nickel oxide ore of recovering nickel and cobalt using a high pressure acid leaching that includes an ore processing step, a leaching step, a solid-liquid separation step, a neutralization step, a zinc removal step, a sulfurization step, and a final neutralization step, the hydrometallurgical process including at least one step selected from the following step (A), step (B-1), and step (B-2):

Step (A): a step of separating and recovering chromite particles in an ore slurry produced in the ore processing step, by a recovery process including a specific gravity separation;
Step (B-1): a step of neutralizing a leachate with a magnesium-based neutralizing agent, the leachate being produced by subjecting the ore slurry that has a chromium grade lowered after the step (A), to the leaching step and the solid-liquid separation step; and
Step (B-2): a step of neutralizing a leach residue slurry with a magnesium-based neutralizing agent to recover hematite particles, the leach residue slurry being produced by subjecting the ore slurry that has a chromium grade lowered after the step (A), to the leaching step and the solid-liquid separation step.

A second aspect of the invention is a hydrometallurgical process for nickel oxide ore of recovering nickel and cobalt from nickel oxide ore using a high pressure acid leaching that includes an ore processing step, a leaching step, a solid-liquid separation step, a neutralization step, a zinc removal step, a sulfurization step, and a final neutralization step, the method including the following step (A), step (B-1), and step (B-2).

Step (A): a step of separating and recovering chromite particles in an ore slurry produced in the ore processing step, by a recovery process including a specific gravity separation;

Step (B-1): a step of neutralizing a leachate with a magnesium-based neutralizing agent, the leachate being produced by subjecting the ore slurry that has a chromium grade lowered after the step (A), to the leaching step and the solid-liquid separation step; and

Step (B-2): a step of neutralizing a leach residue slurry with a magnesium-based neutralizing agent to recover hematite particles, the leach residue slurry being produced by subjecting the ore slurry that has a chromium grade lowered after the step (A), to the leaching step and the solid-liquid separation step.

A third aspect of the invention is the hydrometallurgical process for nickel oxide ore according to the first and second aspects, wherein the recovery process of the step (A) includes subjecting the ore slurry to cyclone classification, reducing fine iron hydroxide particles, and then recovering chromite particles in the ore slurry from the ore slurry as a concentrate of chromite using the specific gravity separation.

A fourth aspect of the invention is the hydrometallurgical process for nickel oxide ore according to the third aspect, wherein the recovery process of the step (A) includes performing cyclone classification without diluting the slurry concentration of the ore slurry.

A fifth aspect of the invention is the hydrometallurgical process for nickel oxide ore according to the first to fourth aspects, wherein the recovery process of the step (A) includes collecting chromite into an underflow in cyclone classification in the entire amount except for unavoidable losses.

A sixth aspect of the invention is the hydrometallurgical process for nickel oxide ore according to the first to fifth aspects, wherein the specific gravity separation includes at least one step of selected from a step of using a density separator and a step of using a spiral concentrator.

A seventh aspect of the invention is the hydrometallurgical process for nickel oxide ore according to the sixth aspect, wherein the step of using the density separator is performed two times or more on concentrated slurry using the density separator.

An eighth aspect of the invention is the hydrometallurgical process for nickel oxide ore according to the sixth aspect, wherein the step of using the spiral concentrator is performed two times or more on concentrated slurry using the spiral concentrator.

A ninth aspect of the invention is the hydrometallurgical process for nickel oxide ore according to the sixth aspect, wherein a pulp content of a slurry that is supplied to the spiral concentrator is 15 wt% solids to 35 wt% solids, preferably 20 wt% solids to 30 wt% solids.

A tenth aspect of the invention is the hydrometallurgical process for nickel oxide ore according to the sixth aspect, wherein an amount of teeter water supplied to the density separator is 0.5 to 7.0 $[m^3 \cdot h^{-1}/m^2]$.

An eleventh aspect of the invention is the hydrometallurgical process for nickel oxide ore according to the first to tenth aspects, wherein after the specific gravity separation, the slurry is subjected to a magnetic separation, which is a physical separation, to remove hematite, and non-magnetized material is then recovered as a chromite concentrate.

A twelfth aspect of the invention is the hydrometallurgical process for nickel oxide ore according to the first and second aspects, wherein in the step (B-2), a pH of the leach residue slurry neutralized is adjusted to be in a range of 4 to 7, and thereafter, final neutralization is carried out using an alkali other than a magnesium-based neutralizing agent.

A thirteenth aspect of the invention is the hydrometallurgical process for nickel oxide ore according to the first to third aspects, wherein in the step (B-2), the leach residue slurry or a neutralized residue slurry including the leach residue slurry is subjected to cyclone classification, and a fine particle portion thus classified is recovered as a concentrate of hematite.

A fourteenth aspect of the invention is the hydrometallurgical process for nickel oxide ore according to the first to thirteenth aspects, wherein the ore processing step is a step of performing removal of foreign material in mined raw material ore and adjustment of the ore particle size to form an ore slurry; the leaching step is a step of adding sulfuric acid to the ore slurry and stirring the mixture at a high temperature and a high pressure to form a leached slurry that is composed of a leach residue and the leachate; the solid-liquid separation step is a step of washing the leached slurry in multiple stages to obtain the leachate containing nickel and cobalt, and the leach residue slurry; the neutralization step is a step of adding an alkali to the leachate, to form a neutralized precipitate slurry containing trivalent iron, and a mother liquor for nickel recovery; the zinc removal step is a step of blowing in hydrogen sulfide gas into the mother liquor for nickel recovery to form a zinc sulfide precipitate slurry and a mother liquor for nickel and cobalt recovery; the sulfurization step is a step of blowing in hydrogen sulfide into the mother liquor for nickel and cobalt recovery, and producing a mixed sulfide containing nickel and cobalt, and a barren liquor; and the final neutralization step is a step of adding an excess of the barren liquor to the leach residue slurry and adjusting the pH of the mixture to be about 8 to 9, to obtain a final neutralized residue.

A fifteenth aspect of the invention is the hydrometallurgical process for nickel oxide ore according to the first to fourteenth aspects, wherein the adjustment of a particle size of the ore in the ore processing step is carried out by screening to a particle size of 2 mm or less.

A sixteenth aspect of the invention is the hydrometallurgical process for nickel oxide ore according to the first to fifteenth aspects, wherein a grade of chromium(III) oxide in the concentrated chromite is 41 wt% or more.

EFFECT OF THE INVENTION

According to the hydrometallurgical process for nickel oxide ore of the invention, when step (A) and step (B) are adopted in a hydrometallurgical process of recovering nickel and cobalt from nickel oxide ore by a high pressure acid leaching that includes an ore processing step, a leaching step, a solid-liquid separation step, a neutralization step, a zinc removal step, a sulfurization step, and a final neutralization step, the conventional problems described above can be solved as below. Therefore, the industrial value of the hydrometallurgical process is enormous.

When the step (A) of the invention is adopted, particles containing chromite in the ore slurry that is produced in the ore processing step are separated and recovered, so that abrasion of facilities such as piping and pumps at the time of transportation of the ore slurry can be suppressed.

Further, since chromite is separated before wet smelting, reduction of the amount of leach residue can be expected, and the amount of a final neutralized residue can be reduced. Furthermore, when the chromite thus separated can be concentrated, the concentrated chromite can also be effectively utilized as a resource.

When the step (B) of the invention is adopted, since hematite in the leach residue that is produced in the solid-liquid separation step is separated and recovered, reduction of the amount of a final neutralized residue that is produced from the final neutralization step can be promoted, the cost and environmental risks caused by compression of the volume of the tailings dam that stores the leach residue that will be disposed, a neutralized precipitate, and the like, can be suppressed, and also, the hematite that has been separated and recovered can be effectively utilized as a resource for iron.

BRIEF DESCRIPTION OF DRAWINGS

Fig. 1 is a flowchart of an embodiment of a hydrometallurgical process for nickel oxide ore according to the invention;
Fig. 2 is a flowchart of a practical plant based on a conventional hydrometallurgical process for nickel oxide ore (Patent Document 2);
Fig. 3 is an exemplary flow diagram of Example 1 of the invention;
Fig. 4 is an exemplary flow diagram of Example 2 of the invention;
Fig. 5 is an exemplary flow diagram of Comparative Example 1 of the invention; and
Fig. 6 is an exemplary flow diagram of Comparative Example 4 of the invention.

DESCRIPTION OF EMBODIMENTS

The hydrometallurgical process for nickel oxide ore of the invention is a hydrometallurgical process of recovering nickel and cobalt from nickel oxide ore by a high pressure acid leaching that includes an ore processing step, a leaching step, a solid-liquid separation step, a neutralization step, a zinc removal step, a sulfurization step, and a final neutralization step, the hydrometallurgical process including at least one step selected from the following step (A), step (B-1), and step (B-2).

[Steps]

• Step (A)

This is a step of separating and recovering chromite particles in the ore slurry produced from the ore processing step, by a recovery process including a specific gravity separation.

• Step (B-1)

This is a step of performing neutralization of a leachate that is obtained by subjecting the ore slurry having a lowered Cr grade through the step (A) to a leaching step and a solid-liquid separation step, using an Mg-based neutralizing agent such as $Mg(OH)_2$ or MgO.

• Step (B-2)

This is a step of performing neutralization of a leach residue slurry that is obtained by subjecting the ore slurry having a lowered Cr grade through the step (A) to a leaching step and a solid-liquid separation step, using an Mg-based neutralizing agent such as $Mg(OH)_2$ or MgO, thereby recovering hematite particles.

It is important for the process of the invention to include at least one step selected from the step (A), step (B-1), and step (B-2), in view of solving the problems.

Adoption of the step (A) is intended to suppress the abrasion of facilities, such as piping and pumps, at the time of transportation of the ore slurry, by separating and recovering particles containing chromite in the ore slurry produced from the previous ore processing step.

That is, abrasion is suppressed by separating chromite that is generally contained in nickel oxide ore and has a very high hardness value. Furthermore, by eliminating in advance chromite from the ore slurry before wet smelting, reduction of the amount of leach residue is expected, and the amount of a final neutralized residue may be reduced.

Furthermore, when the separated and recovered chromite can be sufficiently concentrated, the chromite can also be effectively utilized as a resource.

On the other hand, since adoption of step (B) enables separation and recovery of hematite in the leach residue produced from the solid-liquid separation step, the amount of the final neutralized residue produced from the final neutralization step is reduced, and the expenses and environmental risks caused by compression of the volume of the tailings dam for storing the leach residue to be disposed, a neutralized precipitate and the like, can be suppressed. At the same time, the hematite thus separated and recovered can also be effectively utilized as a resource for iron.

Namely, iron in the nickel oxide ore is hydrolyzed at a high temperature in the leaching step, and therefore, iron is contained in the form of hematite in the final neutralized residue. However, since the final neutralized residue contains gypsum that is formed by a neutralization treatment using a neutralizing agent containing Ca, in addition to chromite in the leach residue, the iron grade is as low as 30% to 40% by weight, and it is not feasible to effectively utilize the final neutralized residue directly as a raw material for iron making or the like.

It is because sulfur (gypsum; calcium sulfate), chromium (chromite) and the like that are contained in the final neutralized residue are components that affect the distribution of trace components in pig iron, the quality of steel products, and the like, and it is desirable to suppress any inclusion of these impurity elements.

On the contrary, in the invention, since neutralization is achieved using an Mg-based neutralizing agent, $MgSO_4$ having high solubility is produced, and since sulfur is fixed to solids, a hematite having a low sulfur-level can be separated and recovered.

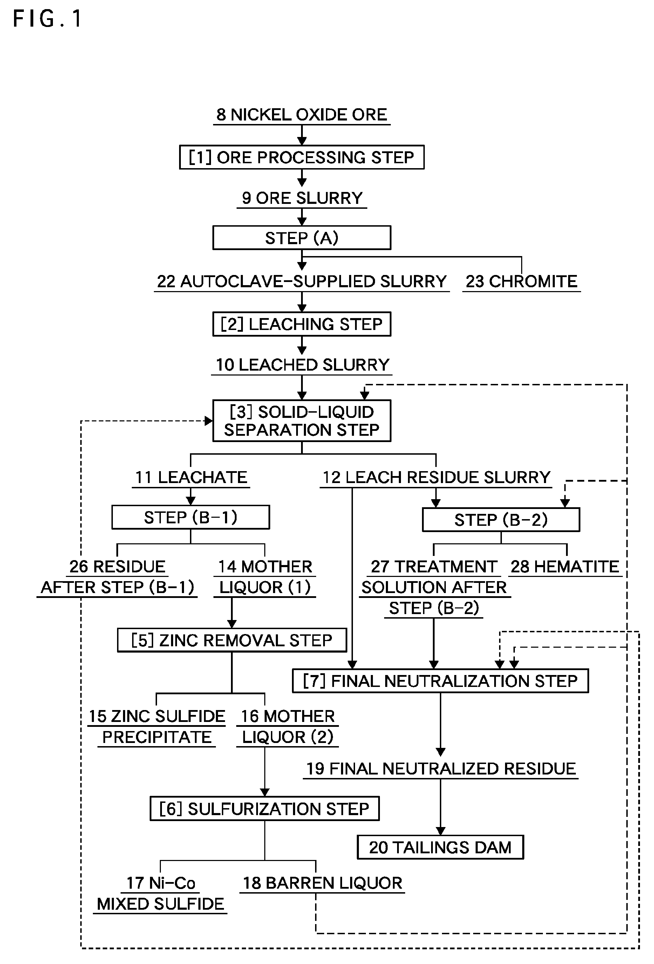

Next, an outline of the hydrometallurgical process for nickel oxide ore of the invention will be described with reference to Fig. 1.

Fig. 1 is a smelting flowchart of an exemplary embodiment according to the hydrometallurgical process for nickel oxide ore related to the invention.

As illustrated in Fig. 1, first, nickel oxide ore 8 is mixed with water to form a mixed liquid in ore processing step [1], and then the removal of foreign material from the mixed liquid and the adjustment of the ore particle size are carried out to form an ore slurry 9.

Thereafter, the ore slurry 9 is subjected to step (A), which is newly provided, to separate and recover chromite 23. An autoclave-supplied slurry 22 on one side is supplied to leaching step [2].

Here, the autoclave-supplied slurry 22 is converted to a leached slurry 10 by leaching valuable components such as nickel and cobalt with sulfuric acid using an autoclave or the like.

The leached slurry 10 thus formed is supplied to solid-liquid separation step [3] that uses multi-stage thickeners or the like, and is separated into a leachate 11 containing nickel and cobalt, and a leach residue slurry 12.

The separated leachate 11 is supplied to the step (B-1), and is separated into a residue 26 after the step (B-1) containing trivalent iron hydroxide as a main component, and a mother liquor (1) 14 containing nickel.

The mother liquor (1) 14 is subjected to zinc removal step [5] in which a sulfurizing agent is added, and is then separated into a zinc sulfide precipitate 15 containing zinc sulfide, and a mother liquor (2) 16 for nickel recovery.

Subsequently, the mother liquor (2) 16 is subjected to sulfurization step [6] in which a sulfurizing agent is added, and is separated into a mixed sulfide 17 containing nickel and cobalt, and a barren liquor 18.

Meanwhile, the barren liquor 18 may be used as washing water for the leach residue in the solid-liquid separation step [3], and the barren liquor 18 may also be supplied to the final neutralization step.

Finally, some of the leach residue slurry 12 is supplied to the step (B-2) together with an excess amount of the barren liquor 18, and is subjected to a neutralization treatment. Thus, hematite 28 is separated and recovered.

At that time, a treatment solution 27 after the step (B-2), and the other portion of the leach residue slurry 12 that was not supplied to the step (B-2) are supplied to [7] final neutralization step, and the leach residue slurry is neutralized to about pH 8 to 9.

The final neutralized residue 19 thus obtained is stored in the tailings dam 20.

Hereinafter, the various steps will be described in more detail.

Ore processing step and step (A)

[1] The ore processing step is a step of forming ore slurry by performing removal of foreign material and adjustment of the ore particle size.

In this step, nickel oxide ore is classified using a wet sieve or the like to separate any foreign material that cannot be leached in a leaching step, ore particles having a particle size that is difficult to be transported by a pump, and the like.

Usually, the screened particle size is about 2 mm, and ore particles having particle sizes greater than that are subjected to a pulverization treatment.

A slurry is formed by the ore that has undergone pulverization-screening treatment, and then the slurry is settled and concentrated, so that an autoclave-supplied slurry having an adjusted solid concentration in the slurry (hereinafter, referred to as slurry concentration) is prepared. In this regard, it is usually desirable to adjust the slurry concentration to about 30% to 45% by weight.

The nickel oxide ore that serves as the raw material to be treated by the hydrometallurgical process of the invention, is composed mainly of so-called lateritic ore, such as limonite and saprolite.

The nickel content of this lateritic ore is usually 0.8% to 2.5% by weight, and nickel is contained in the form of hydroxide or hydrous silica-magnesia (magnesium silicate) mineral.

Further, the content of iron is 10% to 50% by weight, and iron is mainly in the form of trivalent hydroxide (goethite); however, some divalent iron is contained in hydrous silica-magnesia mineral or the like. Silicic acid components are contained in silica mineral such as cristobalite (amorphous silica), and hydrous silica-magnesia mineral.

In addition, many of chromium components are contained 1 to 5 wt% as chromite mineral containing iron or magnesium. Furthermore, magnesia components are contained in silica-magnesia mineral that almost do not contain nickel, which is unweathered and has a high hardness value, in addition to the hydrous silica-magnesia mineral.

As described above, silica mineral, chromite mineral, and silica-magnesia mineral are so-called gangue components that almost do not contain nickel, in regard to lateritic ore.

That is, in the ore slurry produced from the ore processing step, in general, chromite that largely affects the abrasion of facilities such as piping and pumps for the leaching step is included.

Therefore, it is preferable to have chromite separated and recovered in advance for the ore processing step, from the ore slurry produced in the ore processing step.

Here, the distribution state of various components in the ore particles that constitute the ore slurry will be described.

In an EPMA observation of nickel oxide ore, a major portion of the chromium content has a high proportion of chromium existing as a single phase independent of a major portion of the iron content, and there are many particles having a particle size of 20 $\mu$m to 1000 $\mu$m.

This indicates that minerals including chromium are contained in large amounts in particles having a particle size of about 20 $\mu$m or more, and minerals including nickel and iron are contained in large amounts in particles having a particle size of about 20 $\mu$m or less.

Therefore, in order to effectively separate and recover chromite from the ore slurry, it is essential to set up an appropriate classification particle size by slurrifying the ore obtained after eliminating coarse particles, and crushing nickel oxide ore in this ore slurry so as to have an appropriate particle size.

The crushed particle size at this time can be determined in consideration of the original purpose of forming the ore slurry; however, the crushed particle size is preferably about 2 mm or less.

Table 1 shows an example of the ore particle size distribution of the ore slurry obtained by crushing the ore to a particle size of about 2 mm or less, and the grades of various components at various particle size scales.

From Table 1, it is understood that chromium, silicon, magnesium and the like are concentrated in the coarse particle portion having a particle size of 75 $\mu$m or more. On the other hand, it is understood that iron is concentrated in the fine particle portion having a particle size of 75 $\mu$m or less.

[Table 1]

| Particle size [μm] | Partition ratio [wt%] | Chemical composition [wt%] | | | |
|---|---|---|---|---|---|
| | | Fe | Cr | Si | Mg |
| -2000+1400 | 0.9 | 36.0 | 2.0 | 14.0 | 6.0 |
| +850 | 1.8 | 37.0 | 3.0 | 13.0 | 6.0 |
| +355 | 2.7 | 33.0 | 3.0 | 12.0 | 5.0 |
| +75 | 5.3 | 42.0 | 5.0 | 9.0 | 3.0 |
| -75 | 89.3 | 47.0 | 3.0 | 6.0 | 2.0 |
| Average | 100.0 | 45.7 | 2.7 | 6.6 | 2.0 |

Next, step (A) is a step of separating and recovering chromite in the ore slurry produced from the ore processing step. It is also possible to separate and remove mineral particles of silica mineral, silica-magnesia, or the like as process intermediates.

Also, the step (A) may be carried out as a process included in the ore processing step, or may be carried out subsequently to the ore processing step.

The method for step (A) is not particularly limited, and methods using various physical separation means that separate chromite from the ore slurry can be applied. However, among these, in view of the analysis of the distribution state of various components in the ore particles that constitute the ore slurry, in order to concentrate chromite, for example, up to 41 wt% $Cr_2O_3$, which can be easily recycled, after separating and recovering chromite, wet physical separation methods including a specific gravity separation is essential.

That is, as illustrated in Table 1, there are limitations on the grade that can be concentrated by classification, and not only the classification but also separation utilizing specific gravity is needed.

The classification particle size in this classification may be any particle size as long as the goethite containing nickel of the fine particle portion can be efficiently separated, and it is preferable that the classification particle size be selected preferably in the range of 20 μm to 150 μm, and more preferably in the range of 45 μm to 75 μm.

That is, the lower limit of the classification point that can be industrially implemented is 20 μm in most cases, and when this classification particle size is less than 20 μm, concentration of chromite in the coarse particle portion is insufficiently achieved, and also, nickel in the ore slurry used in the leaching step is lost. On the other hand, when the classification particle size is more than 150 μm, removal of silica mineral, chromite, and silica-magnesia in the fine particle portion is insufficiently achieved.

Furthermore, the technique for this classification is not particularly limited, but it is desirable to select cyclone classification that is capable of processing of large quantities with high performance.

Generally, the specific gravity of chromite is known to be larger than that of iron hydroxide such as goethite, and thus, coarse chromite having a large specific gravity and fine goethite having a small specific gravity can be separated efficiently by a cyclone.

The operation pressure of the cyclone is desirably 0.1 MPa to 0.3 MPa when the separation performance and the processing speed are taken into consideration.

Regarding the shape of the cyclone, it is desirable to adjust the shape such that the pulp content of the underflow would be 50 wt% or more.

Furthermore, there are no particular limitations on the pulp content of the ore slurry supplied to the cyclone, but the pulp content is preferably 10 wt% to 30 wt%, and more preferably 15 wt% to 20 wt%.

Separation using a cyclone can be achieved even at a pulp content of 10 wt% or less; however, a large amount of water is needed, and it is also disadvantageous in precipitate concentration in the subsequent steps. Also, when the pulp content is more than 30 wt%, the viscosity of the slurry increases, and separation may become difficult. That is, when the pulp content after the ore processing step is set to 10 wt% to 30 wt% of the range described above, it is not necessary to supply water afresh, and a tank for dilution is also not necessary, which is preferable.

As described above, when the pulp content, the cyclone operation pressure, and the cyclone shape are optimized, distribution of chromite to the overflow can be mostly eliminated, and it is preferable from the viewpoint of chromite recovery.

After goethite that contains nickel is separated and removed as much as possible by the classification using the cyclone described above, chromite is further concentrated using a specific gravity separation apparatus.

The specific gravity separation apparatus used is not particularly limited; however, it is preferable to select at least one of a shaking table, a density separator, and a spiral concentrator, and it is more preferable to select at least one of a density separator and a spiral concentrator, which are adequate for processing of large quantities.

In the case of using the spiral concentrator, the pulp content of the slurry supplied to this is preferably more than 15 wt% but less than 35 wt%, and more preferably more than 20 wt% but less than 30 wt%.

When the pulp content is 15 wt% or less, the separation performance may be deteriorated, and when the pulp content is 35 wt% or more, the flow of particles on the chromite concentration side (inner side) is retained during the separation with a spiral concentrator, and build-up occurs, so that separation may not be achieved sufficiently.

Furthermore, in the case of using the spiral concentrator, a spiral treatment is performed several times on chromite (outer side) which is concentrated to 15 wt% or more and 40 wt% or less and thus the recovery rate of chromite is increased.

In the case of using the density separator, it is desirable to set the amount of teeter water to 0.5 to 7.0 $[m^3 \cdot h^{-1}/m^2]$ .

When the amount of teeter water is less than 0.5, the effect of hindered settling is small, and specific gravity separation is not carried out efficiently.

On the other hand, when the amount of teeter water is larger than 7.0, even chromite particles are cause to rise up, and a loss may occur on the overflow side. In this case, the amount of chromite in the slurry supplied to the leaching step increases, and it becomes disadvantageous from the viewpoints of chromite recovery as well as lowering of the Cr-grade in hematite.

In addition, when the slurry treatment is performed several times using the density separator, the $Cr_2O_3$-grade increases.

Furthermore, simply by this specific gravity separation, concentration can be achieved to obtain a $Cr_2O_3$-grade in chromite of 41 wt% to 50 wt% or more; however, in order to achieve further concentration, it is desirable to separate and remove hematite that is contained in a trace amount.

Since the specific gravity of removed hematite is very close to the specific gravity of chromite, magnetic separation is utilized.

On the occasion of magnetic separation, the magnetic field strength is not particularly limited, and may vary depending on the belt speed, belt thickness, or other apparatuses; however, the magnetic field strength is preferably in the range of 200 [Oe] to 2000 [Oe].

When the magnetic field strength is less than 200 [Oe], the magnetic field is so weak that separation and elimination of hematite may be achieved insufficiently. On the other hand, when the magnetic field strength is more than 2000 [Oe], there is no problem with the removal of hematite, but there are occasions in which even chromite is magnetized, and thus the magnetic separation does not work.

Particularly preferably, it is desirable to use a low-magnetic field magnetic concentrator.

[2] Leaching step

The leaching step is a step of forming a leached slurry composed of a leach residue and a leachate, by adding sulfuric acid to the ore slurry obtained through the ore processing step and step (A), and then stirring the mixture at a temperature of 220°C to 280°C. In this step, a preheater, an autoclave, and a flash tank are used as main facilities.

In regard to this leaching step, leaching of nickel, cobalt and the like as sulfates, and fixation of the leached iron sulfate as hematite are achieved by a leaching reaction represented by the following reaction formulae (1) to (3), and a high temperature thermal hydrolysis reaction represented by reaction formulae (4) and (5).

However, since fixation of iron ions does not proceed to completion, the liquid portion of the leached slurry thus obtainable usually contains divalent and trivalent iron ions in addition to nickel, cobalt and the like.

[Chemical Formula 1]

[Leaching reaction]

$$MO + H_2SO_4 \Rightarrow MSO_4 + H_2O \text{ ...} \qquad (1)$$

(wherein M represents Ni, Co, Fe, Zn, Cu, Mg, Cr, Mn or the like)

$$2Fe(OH)_3 + 3H_2SO_4 \Rightarrow Fe_2(SO_4)_3 + 6H_2O \text{ ...} \qquad (2)$$

$$FeO + H_2SO_4 => FeSO_4 + H_2O \text{ ...} \qquad (3)$$

[Chemical Formula 2]

[High temperature thermal hydrolysis reaction]

$$2FeSO_4 + H_2SO_4 + 1/2O_2 \Rightarrow Fe_2(SO_4)_3\ H_2O \ ... \qquad (4)$$

$$Fe_2(SO_4)_3 + 3H_2O \Rightarrow Fe_2O_3 + 3H_2SO_4 \ ... \qquad (5)$$

The reaction temperature for the leaching step is 220°C to 280°C, and preferably 240°C to 270°C.

That is, when the reactions are carried out in this temperature range, iron is fixed as hematite.

When the reaction temperature is lower than 220°C, since the rate of the high temperature thermal hydrolysis reaction is slow, iron remains dissolved in the reaction solution. Therefore, the solution purification load for removing iron is increased, and it may be very difficult to separate iron from nickel. On the other hand, when the temperature exceeds 280°C, the high temperature thermal hydrolysis reaction itself is accelerated; however, it is difficult to select the material for the vessel used in high-temperature pressure leaching, and the cost for steam applied to the temperature rise is increased, which is therefore inappropriate.

The amount of use of sulfuric acid used in the leaching step is not particularly limited, and an amount slightly excessive compared to the stoichiometric amount required for the iron in the ore to be leached and converted to hematite, for example, 300 kg to 400 kg per ton of the ore, is used. Particularly, when the amount of addition of sulfuric acid per ton of the ore is more than 400 kg, the cost for sulfuric acid and the cost for the neutralizing agent in the subsequent steps are increased, which is not preferable. Furthermore, regarding the amount of use of sulfuric acid in view of the leaching step product, the concentration of free sulfuric acid at the time of completion of leaching is aimed to be 25 g/L to 50 g/L, and preferably, an amount of use of sulfuric acid of 35 g/L to 45 g/L is used.

When the above-described conditions are satisfied, the true density of the leach residue is increased, a high density leach residue is stably produced, and the solid-liquid separability of the slurry is increased. Therefore, simplification of the facilities of the solid-liquid separation step, which is the subsequent step, can be achieved.

That is, when the concentration is less than 25 g/L, when the slurry including the leaching residue is settled, precipitate concentration of the solid components is achieved incompletely, and floating solid components remain in the supernatant. This is because the rate of the high temperature thermal hydrolysis reaction is slow, dehydration of iron hydroxide does not proceed sufficiently, and hematite having a low true density is formed.

On the other hand, when the concentration is more than 50 g/L, it is necessary to enhance durability of the leaching facilities, and since the amount of use of the neutralizing agent required for the neutralization of acid is markedly increased, it is disadvantageous in view of cost.

[3] Solid-liquid separation step

The solid-liquid separation step is a step of washing in multiple stages the leached slurry formed in the previous leaching step, and obtaining a leachate containing nickel and cobalt, and a leach residue. Thereby, nickel and the like that adhere to the leach residue and are disposed are recovered into the leachate.

[4] Neutralization step [step (B-1) and step (B-2)]

(4-1) Neutralization step 1 [treatment of leachate]

• Step (B-1)

This step (B-1) is a step in which a neutralizing agent (pH adjusting agent) is added to adjust the pH to 4 or less, and preferably to be in the range of 3.2 to 3.8, while oxidation of a leachate 11 obtained in the leaching step is suppressed by neutralizing the leachate 11 that has been separated in the previous solid-liquid separation step, and a residue 26 after the step (B-1) as a neutralized precipitate slurry containing trivalent iron, and a mother liquor (1) 14 for nickel recovery are formed.

When this step is used, neutralization of the excess acid used in the leaching step is carried out, and also, removal of trivalent iron ions remaining in the leachate is carried out.

Upon the neutralization, when the pH exceeds 4, generation of nickel hydroxide is increased.

When a neutralizing agent containing Ca, such as $CaCO_3$, is used, gypsum is produced; however, since the residue 26 after the step (B-1) of the neutralized precipitate slurry generated in this step is such that a portion is returned to the solid-liquid separation step and repeatedly used, incorporation of gypsum into the leach residue slurry occurs.

Thus, an Mg-based alkali such as $Mg(OH)_2$, which does not contain Ca, or an Mg-based neutralizing agent such as MgO, which dissolves in the leachate and thereby exhibits alkalinity, is used as the neutralizing agent.

[5] Zinc removal step

This zinc removal step is a step in which, prior to the step of separating nickel and cobalt as sulfides, hydrogen sulfide gas is blown into the mother liquor obtained in the previous step, sulfides containing zinc are produced, and zinc sulfide precipitate slurry and a mother liquor for nickel and cobalt recovery are formed.

This is a step of selectively removing zinc by suppressing the rate of a sulfurization reaction by generating mild conditions at the time of the sulfurization reaction, and suppressing co-precipitation of nickel that co-exists at a higher concentration compared with zinc.

This zinc sulfide precipitate slurry thus obtained can be sent to the final neutralization step (7) and treated, similarly to the neutralized precipitate slurry obtainable in the neutralization step.

[6] Sulfurization step

This sulfurization step is a step of blowing hydrogen sulfide into the mother liquor (2) for nickel and cobalt recovery obtained in the zinc removal step, and producing a mixed sulfide (zinc sulfide precipitate) 17 containing nickel and cobalt, and a barren liquor 18.

Here, the barren liquor 18 thus obtained is at a pH of about 1 to 3, and contains impurities such as iron, magnesium and manganese that are contained without being sulfurized, as well as slight amounts of nickel and cobalt as a recovery loss. Therefore, the barren liquor 18 is used as washing water for the leach residue in the solid-liquid separation step, and as the washing water for the neutralized residue produced in the neutralization step.

(4-2) Neutralization step 2 [treatment of leach residue slurry]

• Step (B-2)

This step (B-2) is a step of neutralizing part of the leach residue (leach residue slurry 12) produced in the solid-liquid separation step, using an Mg-based alkali such as $Mg(OH)_2$ or an Mg-based neutralizing agent such as MgO, and recovering hematite particles.

The method for step (B-2) is not particularly limited, but a Ca-based alkali is not used as the neutralizing agent. For example, when $CaCO_3$ is used as the neutralizing agent, this compound reacts with adhering sulfuric acid, and gypsum is produced. Since this gypsum has low solubility, gypsum is precipitated as a solid and increases the sulfur grade in the residue. On the other hand, since $MgSO_4$ has high solubility, this compound is not easily precipitated as a solid, and is effective for the decrease of sulfur.

Therefore, the neutralizing agent is preferably $Mg(OH)_2$, which is an Mg-based alkali; however, an Mg-based neutralizing agent such as $MgO_2$ may be used.

Here, the analysis of the distribution state of various components in the ore particles that constitute the leach residue slurry 12 will be described.

First, Table 2 shows an example of the ore particle size distribution of the leach residue obtained by leaching the ore slurry obtained by crushing the ore to a particle size of about 2 mm or less, and the grades of various components at various particle size scales.

[Table 2]

| Particle size [μm] | Partition ratio [wt%] | Chemical composition [wt%] | | | |
|---|---|---|---|---|---|
| | | Fe | Cr | Si | Mg |
| -2000+1400 | 0.0 | - | - | - | - |
| +850 | 0.0 | - | - | - | - |
| +355 | 0.1 | 28.0 | 2.0 | 24.0 | 0.0 |
| +75 | 0.7 | 26.0 | 7.0 | 25.0 | 1.0 |
| -75 | 99.1 | 45.0 | 2.0 | 8.0 | 1.0 |
| Average | 100.0 | 44.6 | 2.5 | 7.8 | 1.0 |

From Table 2, it can be seen that iron is concentrated in the fine particle portion having a particle size of 75 μm or less, and silicon is separated in this portion. Meanwhile, the analysis of the leach residue was carried out by removing adhering sulfuric acid by washing the leach residue slurry with water.

From the results described above, by utilizing the fact that particles containing iron at a high content are fine particles than those particles containing chromium, silicon and the like at high contents, the particles containing iron can be separated from the coarse particle portion containing chromium, silicon and the like at high contents, by means of screening means such as a classification method, and driven away out of the system, and hematite can be recovered as a resource.

The classification method is preferably a treatment using a cyclone or the like, which is capable of processing of large quantities.

[7] Final neutralization step

This final neutralization step is a step of precipitating metal ions in the liquid as neutralized precipitate and obtaining a final neutralized residue 19, by adding a treatment solution 27 after the step (B-2), which is obtained in the step (B-2), the portion of the slurry that has not been treated in the step (B-2) in the leach residue slurry 12 obtained after the solid-liquid separation step, and the residue 26 after the step (B-1), or optionally, a product obtained by slurrifying the zinc sulfide precipitate 15 obtainable in the zinc removal step; further adding a limestone slurry and a slaked lime slurry; and adjusting the pH to about 8 or 9. Meanwhile, the final neutralized residue 19 thus obtained is stored in the tailings dam 20.

EXAMPLES

Hereinafter, the invention will be further described by way of Examples, but the invention is not intended to be limited to these Examples.

In the Examples, analyses are carried out using a fluorescent X-ray analysis method or an ICP emission analysis method for the analysis of metals.

Example 1

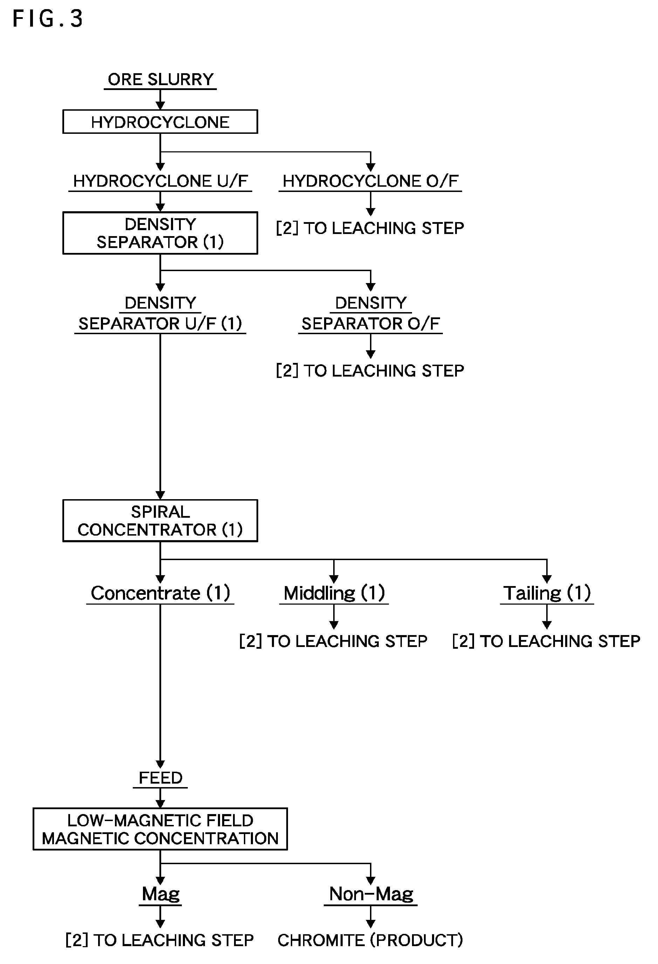

In the production flow of Fig. 1 according to the invention, the step (A) for the ore slurry 9 was performed according to the exemplary flow diagram illustrated in Fig. 3, the ore slurry 9 was subjected to the classification treatment with the hydrocyclone, goethite was separated from the ore slurry 9, and then the specific gravity separation 1 was performed by combination in the order of a density separator and a spiral concentrator.

Classification of an ore slurry having a composition as indicated in Table 3 was carried out using a hydrocyclone (manufactured by Daiki Ataka Engineering Co., Ltd., Model MD-9) as the classification apparatus used in the step (A).

In Example 1, classification was carried out under the conditions of a slurry concentration of 15 wt%, a slurry temperature set to normal temperature, and an operation pressure of 0.2 MPa.

The ore slurry composition and the hydrocyclone underflow (U/F) composition are presented together in Table 3. Meanwhile, the unit of the following table is percent (%) by weight.

[Table 3]

|  | $Cr_2O_3$ | $SiO_2$ | Fe | Ni |
|---|---|---|---|---|
| Ore slurry | 2.5 | 4.4 | 51.5 | 1.2 |
| Hydrocyclone U/F | 13.5 | 6.0 | 45.2 | 0.8 |
| Unit: wt% | | | | |

As can be seen from Table 3, in the coarse particle portion (hydrocyclone U/F) obtained by the hydrocyclone, the level of $Cr_2O_3$ was increased to 13.5 wt% relative to 2.5 wt% in the supplied ore, and the level of $SiO_2$ was increased to 6.0 wt% relative to 4.4 wt% in the supplied ore; however, the level of Fe was reduced to 45.2 wt% relative to the iron grade 51.5 wt% in the supplied ore.

From the above, it is understood that silica mineral and chromite are concentrated and separated in the coarse particle portion by classification of the ore slurry.

Next, in order to understand the separation due to a density separator, the hydrocyclone U/F (slurry concentration: 33 wt%) was supplied to a density separator (manufactured by Outotec, Inc., "TANKSIZER TS-Lab", and having an inner diameter of tank: 228.6 mm).

The supply rate was set to 56 [kg/Hr], and the slurry temperature was set to normal temperature.

The process was carried out by setting the amount of teeter water at this time to 6.9 [$m^3 \cdot h^{-1}/m^2$], and the set point (set value of the densitometer) to 20.

The compositions of the feed of the density separator (hydrocyclone U/F) and the underflow (density separator U/F) are presented in Table 4.

[Table 4]

| | $Cr_2O_3$ | $SiO_2$ | Fe | Ni |
|---|---|---|---|---|
| Hydrocyclone U/F | 13.5 | 6.0 | 45.2 | 0.8 |
| Density separator U/F | 16.9 | 1.9 | 35.2 | 0.7 |
| Unit: wt% | | | | |

As can be seen from Table 4, in the coarse particle portion (density separator U/F) obtained by the density separator, the level of $Cr_2O_3$ was increased to 16.9 wt% relative to 13.5 wt% at the time of the classification with the hydrocyclone (hydrocyclone U/F). However, the level of $SiO_2$ was reduced to 1.9 wt% relative to 6.0 wt% and the level of iron was reduced to 35.2 wt% relative to 45.2 wt%.

From the above results, it is understood that silica mineral and chromite are concentrated and separated in the coarse particle portion by the density separator treatment.

Moreover, in order to understand the separation due to a spiral concentrator, the separation of the hydrocyclone U/F (slurry concentration: 33 wt%) was performed by a spiral concentrator (manufactured by Outotec, Inc., "MC7000").

The results are presented in Table 5.

[Table 5]

| | $Cr_2O_3$ | $SiO_2$ | Fe | Ni |
|---|---|---|---|---|
| Hydrocyclone underflow U/F | 13.5 | 6.0 | 45.2 | 0.8 |
| Concentrate | 41.1 | 0.5 | 28.3 | 0.2 |
| Middling | 24.4 | 1.5 | 32.5 | 0.4 |
| Tailing | 5.3 | 4.2 | 48.0 | 1.5 |
| Unit: wt% | | | | |

As can be seen from Table 5, in the "Concentrate" obtained by the spiral concentrator, the level of $Cr_2O_3$ was increased to 41.1 wt% relative to 13.5 wt% in the supplied ore.

The level of $Cr_2O_3$ was increased to 24.4 wt% in the Middling. On the other hand, the level of $Cr_2O_3$ was 5.3 wt% in the Tailing.

From these results, it can be understood that chromite is separated even by the spiral treatment.

Therefore, then, the density separator U/F (1) (slurry concentration: 75 wt%) obtained by the density separator was diluted with water to obtain a slurry concentration of 25 wt% in accordance with the flow in Fig. 3, and was subjected to a separation test using a spiral concentrator (manufactured by Outotec, Inc., "MC7000").

The test results are presented in Table 6.

[Table 6]

| | $Cr_2O_3$ | $SiO_2$ | Fe | Ni |
|---|---|---|---|---|
| Density separator U/F | 16.9 | 1.9 | 35.2 | 0.7 |
| Concentrate | 41.2 | 0.6 | 28.5 | 0.3 |
| Middling | 24.3 | 1.6 | 32.7 | 0.5 |

(continued)

|  | Cr$_2$O$_3$ | SiO$_2$ | Fe | Ni |
|---|---|---|---|---|
| Tailing | 5.0 | 4.5 | 48.3 | 1.7 |
| Unit: wt% | | | | |

As can be seen from Table 6, in the "Concentrate" obtained by the spiral concentrator, the level of Cr$_2$O$_3$ was increased to 41.2 wt% relative to 16.9 wt% in the supplied ore.

The level of Cr$_2$O$_3$ was increased to 24.3 wt% in the Middling. On the other hand, the level of Cr$_2$O$_3$ was 5.0 wt% in the Tailing.

From these results, it can be understood that chromite is separated by the spiral treatment.

Next, the "Concentrate" obtained by the spiral test was diluted to a slurry concentration of 20 wt%, and the dilution was supplied to a low-magnetic field magnetic concentrator (manufactured by Outotec, Inc., "Inprosys benchtop LIMS") at a supply rate of 45.4 [kg/Hr]. Thus, magnetized material (Mag) and non-magnetized material (Non-mag) were obtained.

The results are presented in Table 7.

[Table 7]

|  | Cr$_2$O$_3$ | SiO$_2$ | Fe | Ni |
|---|---|---|---|---|
| Feed | 41.2 | 0.6 | 28.5 | 0.3 |
| Mag | 29.5 | 0.8 | 43.7 | 0.4 |
| Non-Mag | 45.3 | 0.6 | 23.1 | 0.2 |
| Unit: wt% | | | | |

As can be seen from Table 7, the Cr$_2$O$_3$ obtained by the low-magnetic field magnetic concentration (non-magnetized material/Non-mag) was increased to 45.3 wt% relative to 41.2 wt% in the supplied ore. On the other hand, the Fe was reduced to 23.1 wt% from 28.5 wt%.

In contrast, the Fe-grade of the Cr$_2$O$_3$ (magnetized material/Mag) was 43.7 wt%, which indicates that the Fe-grade was high, it can be seen that magnetite was separated and removed by magnetic concentration, and the Cr$_2$O$_3$-grade of chromite was increased.

From the above results, it can be said that in the smelting method of the present invention described in Example 1, concentration can be achieved to a concentration that surpasses the Cr$_2$O$_3$-grade of the chromite commonly available in the market.

The recovery rate of the chromite obtained in Example 1 was 42.5 wt%.

The calculation of the recovery rate was performed by the following Formula (6):

[Formula 1]

$$\text{Recovery rate [\%]} = \text{weight of recovered } Cr_2O_3 \ / \text{weight of } Cr_2O_3 \text{ in introduced ore} \ \dots \ (6)$$

Example 2

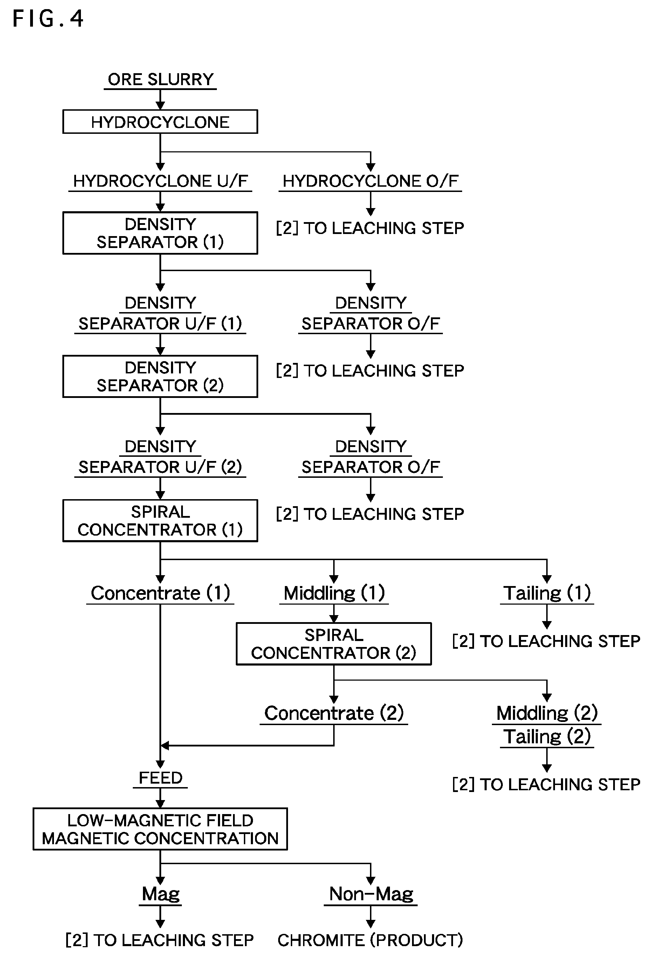

In the production flow of Fig. 1 according to the invention, with respect to the step (A) for the ore slurry 9, the specific gravity separation was repeatedly performed two times using the density separator as illustrated in the exemplary flow diagram illustrated in Fig. 4, and then the specific gravity separation was performed using the spiral concentrator.

First, classification of ore slurry having a composition as indicated in Table 8 was carried out using a hydrocyclone (manufactured by Daiki Ataka Engineering Co., Ltd., Model MD-9) as the classification apparatus used in the step (A).

In Example 2, the classification was carried out under the conditions of a slurry concentration of 15% by weight, a slurry temperature set to normal temperature, and an operation pressure of 0.2 MPa.

The ore slurry composition and the hydrocyclone U/F composition are presented together in Table 8. The unit of the following table is percent (%) by weight.

[Table 8]

|  | $Cr_2O_3$ | $SiO_2$ | Fe | Ni |
|---|---|---|---|---|
| Ore slurry | 2.5 | 4.4 | 51.5 | 1.2 |
| Hydrocyclone U/F | 13.5 | 6.0 | 45.2 | 0.8 |
| Unit: wt% | | | | |

As can be seen from Table 8, in the coarse particle portion (hydrocyclone U/F) obtained by the hydrocyclone, the level of $Cr_2O_3$ was increased to 13.5 wt% relative to 2.5 wt% in the supplied ore, and the level of $SiO_2$ was increased to 6.0 wt% relative to 4.4 wt% in the supplied ore; however, the level of Fe was reduced to 45.2 wt% relative to the iron grade 51.5 wt% in the supplied ore.

From the above, it is understood that silica mineral and chromite are concentrated and separated in the coarse particle portion by classification of the ore slurry.

Next, the hydrocyclone U/F (slurry concentration: 33 wet%) was supplied to a density separator (manufactured by Outotec, Inc., "Tanksizer TS-Lab", and having an inner diameter of tank: 228.6 mm).

The supply rate was set to 56 [kg/Hr], and the slurry temperature was set to normal temperature.

The process was carried out by setting the amount of teeter water at this time to 6.9 [$m^3 \cdot h^{-1}/m^2$] and the set point (set value of the densitometer) to 20.

The compositions of the feed of the density separator (1) (hydrocyclone U/F) and the underflow (density separator U/F (1)) are presented in Table 9.

[Table 9]

|  | $Cr_2O_3$ | $SiO_2$ | Fe | Ni |
|---|---|---|---|---|
| Hydrocyclone U/F | 13.5 | 6.0 | 45.2 | 0.8 |
| Density separator U/F (1) | 16.9 | 1.9 | 35.2 | 0.7 |
| Unit: wt% | | | | |

As can be seen from Table 9, in the coarse particle portion (density separator U/F (1)) obtained by the density separator (1), the level of $Cr_2O_3$ was increased to 16.9 wt% relative to 13.5 wt% at the time of the classification with the cyclone (HC-U/F). However, the level of $SiO_2$ was reduced to 1.9 wt% relative to 6.0 wt% and the level of iron was reduced to 35.2 wt% relative to 45.2 wt%.

From the above results, it is understood that silica mineral and chromite are concentrated and separated in the coarse particle portion by the density separator treatment.

The density separator U/F (1) (slurry concentration: 75 wet%) was diluted with water to obtain a slurry concentration of 40 wt%, and was again subjected to the density separator treatment. The compositions of the feed of the density separator (2) (density separator U/F (1) obtained by the first density separator treatment) and the underflow (density separator U/F (2) obtained by the second density separator treatment) are presented in Table 10.

[Table 10]

|  | $Cr_2O_3$ | $SiO_2$ | Fe | Ni |
|---|---|---|---|---|
| Density separator U/F (1) | 16.9 | 1.9 | 35.2 | 0.7 |
| Density separator U/F (2) | 21.1 | 1.3 | 30.6 | 0.4 |
| Unit: wt% | | | | |

From Table 10, it can be found that the level of $Cr_2O_3$ increases from 16.9 wt% to 21.1 wt%. Thus, it can be confirmed that the chromite concentration is promoted when the treatment with the density separator is repeatedly performed.

Next, a spiral test was performed in which the density separator U/F (2) (slurry concentration: 75 wet%) obtained by the density separator (2) was diluted with water to obtain a slurry concentration of 25 wt% and was treated using a spiral separator (a spiral concentrator manufactured by Outotec, Inc., "MC7000").

The spiral test results are presented in Table 11.

[Table 11]

|  | Cr$_2$O$_3$ | SiO$_2$ | Fe | Ni |
|---|---|---|---|---|
| Density separator U/F (2) | 21.1 | 1.3 | 30.6 | 0.4 |
| Concentrate | 44.5 | 0.4 | 24.8 | 0.2 |
| Middling (1) | 30.3 | 1.1 | 28.4 | 0.3 |
| Tailing | 6.3 | 3.0 | 42.0 | 1.1 |
| Unit: wt% | | | | |

As can be seen from Table 11, in the "Concentrate" obtained by the spiral concentrator, the Cr$_2$O$_3$ was increased to 44.5 wt% relative to 21.1 wt% in the supplied ore. The Cr$_2$O$_3$ was increased to 30.3 wt% in the "Middling". On the other hand, the Cr$_2$O$_3$ was 6.3 wt% in the "Tailing".

From these results, it can be found that the chromite is separated by the spiral treatment.

Next, the separation of the Middling (1) having the Cr$_2$O$_3$ concentration of 30.3 wt% was again tried by the spiral treatment. The results are presented in Table 12.

[Table 12]

|  | Cr$_2$O$_3$ | SiO$_2$ | Fe | Ni |
|---|---|---|---|---|
| Middling (1) | 30.3 | 1.1 | 28.4 | 0.3 |
| Concentrate | 42.5 | 0.4 | 24.7 | 0.2 |
| Middling (2) | 19.4 | 1.8 | 27.6 | 0.5 |
| Tailing | 19.5 | 2.2 | 36.1 | 0.7 |
| Unit: wt% | | | | |

As can be seen from Table 12, in the "Concentrate", when the Middling (1) was subjected to the spiral treatment again, the Cr$_2$O$_3$ was increased to 42.5 wt% relative to 30.3 wt% in the supplied ore. On the other hand, the Cr$_2$O$_3$ was reduced to 19.4 wet% in a Middling (2) and was reduced to 19.5 wt% in a Tailing. Preferably, these Middling (2) and Tailing are again subjected to the spiral treatment as necessary.

The "Concentrate" obtained by two spiral tests was mixed and diluted to a slurry concentration of 20 wt%, and the dilution was supplied to a low-magnetic field magnetic concentrator (manufactured by Outotec, Inc., "Inprosys benchtop LIMS") at a supply rate of 45.4 [kg/Hr]. Thus, magnetized material (Mag) and non-magnetized material (Non-mag) were obtained. The results are presented in Table 13.

[Table 13]

|  | Cr$_2$O$_3$ | SiO$_2$ | Fe | Ni |
|---|---|---|---|---|
| Feed | 44.1 | 0.4 | 24.7 | 0.2 |
| Mag | 31.6 | 0.6 | 36.6 | 0.3 |
| Non-Mag | 48.5 | 0.4 | 20.0 | 0.1 |
| Unit: wt% | | | | |

As can be seen from Table 13, the Cr$_2$O$_3$ obtained by the low-magnetic field magnetic concentration (non-magnetized material/Non-mag) was increased to 48.5 wet% relative to 44.1 wt% in the supplied ore. On the other hand, the Fe was reduced to 20.0 wt% from 24.7 wt%.

In contrast, the Fe-grade of the Cr$_2$O$_3$ (magnetized material/Mag) was 36.6 wet%, which indicates that the Fe-grade was high, it can be seen that magnetite was separated and removed by magnetic concentration, and the Cr$_2$O$_3$-grade of chromite was increased.

From the above results, it can be said that in the smelting method of the present invention described in Example 2, concentration can be achieved to a concentration that surpasses the Cr$_2$O$_3$-grade of the chromite commonly available in the market.

The recovery rate of the chromite obtained in Example 2 was 44%.

The calculation of the recovery rate was performed by Formula (6) as in Example 1.

(Comparative Example 1)

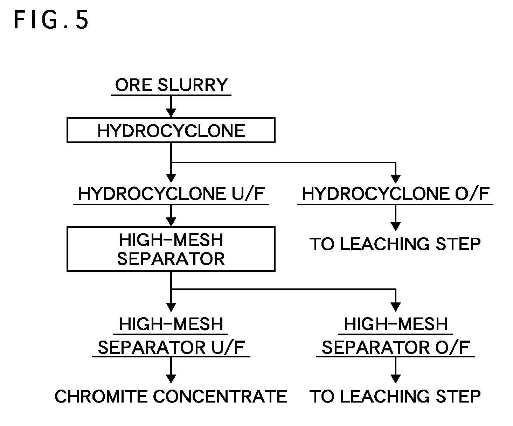

After a classification treatment was performed using a hydrocyclone according to an exemplary flow diagram according to Comparative Example 1 illustrated in Fig. 5, the separation was performed using a high-mesh separator according to the size of solids contained in the ore slurry 9, instead of the specific gravity separation treatment in Example 1.

Classification of the ore slurry was carried out using a hydrocyclone (manufactured by Daiki Ataka Engineering Co., Ltd., "Model MD-9") as the classification apparatus.

Here, classification was carried out under the conditions of a slurry concentration of 9.8% by weight, a slurry temperature set to normal temperature, and an operation pressure of 0.22 MPa.

The hydrocyclone underflow (hydrocyclone U/F) having a slurry concentration of 33 wet% was diluted to a slurry concentration of 4.9 wt%, and the dilution was charged into a high-mesh separator (manufactured by Kikosha Co., Ltd., "KUC-612S").

The supply rate to the high-mesh separator was 0.98 [$m^3$/hour], the speed of rotation of the bucket was 0.8 rpm, the bucket length was 75 mm, and the bucket had holes having a diameter of 4 mm opened at a pitch of 6 mm, while the ratio of hole area was 40%.

The amount of washing water was set to 6 $m^3$/hour.

The compositions of the ore slurry and the hydrocyclone underflow (hydrocyclone U/F) and the composition of the underflow of the high-mesh separator (high-mesh separator U/F) are presented in Table 14.

[Table 14]

|  | $Cr_2O_3$ | Ni |
|---|---|---|
| Ore slurry | 4.1 | 1.1 |
| Hydrocyclone U/F | 13.0 | 0.8 |
| High-mesh separator U/F | 19.1 | 0.5 |
| Unit: wet% | | |

As is obvious from Table 14, concentration was achieved from the $Cr_2O_3$-grade of the ore slurry of 4.1 wt% to 13.0 wt% in the coarse particle portion of the hydrocyclone (hydrocyclone U/F), and to 19.1 wt% in the coarse particle portion of the high-mesh separator (high-mesh separator U/F); however, the intended composition level of commercially available products was not achieved.

In this process, there was no problem in the concentration using a hydrocyclone in particular; however, it can be judged that the concentration with the high-mesh separator is unsatisfactory.

Thus, the following investigation was carried out to find the cause.

Each of the underflows (hydrocyclone U/F and high-mesh separator U/F) was screened with a sieve having a mesh size of 75 $\mu$m, and was subjected to the analysis based on the above and below values of 75 $\mu$m. The results presented in Table 15 were obtained.

[Table 15]

| | Size [$\mu$m] | Distribution ratio [wt%] | Grade [wt%] | | | | | |
|---|---|---|---|---|---|---|---|---|
| | | | Cr | $Cr_2O_3$ | Fe | Ni | Total of Cr | Total of $Cr_2O_3$ |
| Hydrocyclone U/F | +75 | 43 | 16.7 | 24.4 | 36.0 | 0.5 | 8.9 | 13.0 |
| | -75 | 57 | 3.0 | 4.4 | 50.6 | 1.0 | | |
| High-mesh separator U/F | +75 | 85 | 14.2 | 20.7 | 38.1 | 0.5 | 13.1 | 19.1 |
| | -75 | 15 | 6.7 | 9.8 | 49.8 | 0.7 | | |

In Table 15, it was found that the Cr-grade of the underflow of the high-mesh separator (high-mesh separator U/F) was 14.2 wet% (20.7 wt%; $Cr_2O_3$), which was lower than 16.7 wt% (24.4 wt%; $Cr_2O_3$) of the underflow of the hydrocyclone (hydrocyclone U/F), and specific gravity separation was not achieved at all.

From these results, the high-mesh separator performed only the operation of slime removal, and did not perform the operation of specific gravity separation.

As such, it can be seen that a chromite having a $Cr_2O_3$-grade equivalent to the level of commercially available products could not be concentrated any further, unless specific gravity separation was carried out.

Example 3

The overflow of the hydrocyclone and the overflow of the density separator of Example 1 were introduced into an autoclave at a ratio of 77 : 15 by solid weight, 98% sulfuric acid was added to this mixture, and the mixture was subjected to high temperature pressurized sulfuric acid leaching under the following conditions. Thus, a leached slurry 10 was produced.

Furthermore, the leached slurry thus produced was separated into a leachate 11 and a leach residue slurry 12 by a solid-liquid separation step.

[Leaching conditions]

Leaching temperature: 245°C
Leaching time: 60 minutes
Final free sulfuric acid concentration (at the time of completion of leaching): 40 [g/L]
Slurry concentration: 30 wt%
Autoclave volume: 5 L

Next, in order to find the $Cr_2O_3$-grade in the leach residue slurry 12, $Mg(OH)_2$ slurry as a neutralizing agent at a concentration of 20 wet% was added to the leach residue slurry 12, and the leach residue slurry was neutralized at 70°C to obtain a pH of 2.5.

Subsequently, this slurry was subjected to solid-liquid separation using a 5C filter paper. The $Mg(OH)_2$ slurry was further added thereto until the slurry reached pH 6, and then the slurry was further subjected to solid-liquid separation using the 5C filter paper.

The $Cr_2O_3$-grade of the final neutralized residue thus obtained was 0.9 wt%. Since the solubility of $MgSO_4$ to be produced was high, the sulfur-grade of the residue was 0.53 wet%.

(Comparative Example 2)

The ore slurry of Example 1 was treated in the same manner as in Example 3, except that the ore slurry was introduced into an autoclave without treating the slurry with a hydrocyclone and a density separator. The $Cr_2O_3$-grade of the final neutralized residue thus obtained was 2.1 wet%.

Since the solubility of $MgSO_4$ to be produced was high, the sulfur-grade of the residue was 0.53 wt%.

As is obvious from a comparison between Example 3 and Comparative Example 2, when the ore slurry was first classified with the hydrocyclone and then treated with the density separator, which is one of specific gravity separation apparatuses, chromite in the ore slurry could be separated and removed, and the $Cr_2O_3$-grade in the residue could be halved.

(Comparative Example 3)

A leach residue slurry 12 was produced in the same manner as in Example 3, slaked lime slurry at a concentration of 25 wet% was added as a neutralizing agent to the entire amount of the leach residue slurry, and the slurry was neutralized to pH 8.5 at 60°C. Metal ions were precipitated as precipitate, and a neutralized residue and a treatment solution after neutralization were obtained by solid-liquid separation.

This neutralized residue was subjected to cyclone classification, and thus hematite 28 was separated.

A mixed liquid was prepared by mixing the remaining neutralized residue from which hematite 28 had been separated with the treatment solution after neutralization, and a slaked lime slurry at a concentration of 25 wet% was added thereto. Thereafter, solid-liquid separation was repeated using a 5C filter paper, and thus a final neutralized residue was obtained.

The $Cr_2O_3$-grade of the final neutralized residue thus obtained was 0.8 wt%. Since the solubility of $CaSO_4$ to

be produced was small, the sulfur-grade of the residue was 5.72 wet%, and the Ca-grade was 8.49 wt%.

(Comparative Example 4)

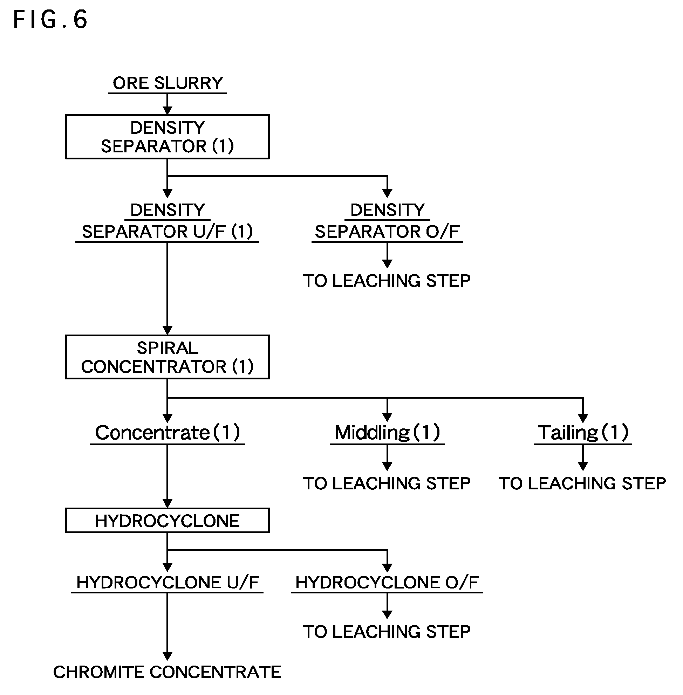

As illustrated in an exemplary flow diagram according to Comparative Example 4 illustrated in Fig. 6, a separation test was performed under the same condition as that of Example 1, except that the ore slurry 9 was subjected to the specific gravity separation in the same manner as in Example 1 without the classification treatment by the hydrocyclone and the classification treatment was finally performed by the hydrocyclone.

Table 16 indicates results obtained in such a manner that the ore which was not subjected to the classification treatment by the hydrocyclone was subjected to a specific gravity separation treatment using a density separator.

The viscosity of a feed (ore slurry) was high, but the concentration of $Cr_2O_s$ subjected to the classification treatment by the density separator was not as high as the underflow (see a density separator U/F in Table 6) subjected to feeding.

[Table 16]

|  | $Cr_2O_3$ | $SiO_2$ | Fe | Ni |
|---|---|---|---|---|
| Feed | 2.5 | 4.4 | 51.5 | 1.2 |
| Density separator U/F | 9.5 | 2.5 | 40.2 | 1.0 |
| Unit: wt% | | | | |

The results of the separation of the density separator U/F with a spiral separator are presented in Table 17.

As is obvious from Table 17, even when the specific gravity separation treatment was performed by the spiral separator, the $Cr_2O_3$ concentration was 25.3 wet%, but did not exceed 41 wt% or more.

This is considered that the slurry viscosity is high and the effect of the spiral cannot be exhibited because coarse particles and fine particles are not separated by the density separator.

[Table 17]

|  | $Cr_2O_3$ | $SiO_2$ | Fe | Ni |
|---|---|---|---|---|
| Density separator U/F | 9.5 | 2.5 | 40.2 | 1.0 |
| Concentrate | 25.3 | 0.8 | 32.6 | 0.5 |
| Middling | 13.6 | 2.1 | 37.3 | 0.8 |
| Tailing | 2.8 | 5.9 | 55.2 | 2.6 |
| Unit: wt% | | | | |

Subsequently, the classification treatment was performed by the hydrocyclone.

As indicated in Table 18, the concentration of $Cr_2O_3$ was 35.3 wt%, but did not meet 41 wt% or more.

[Table 18]

|  | $Cr_2O_3$ | $SiO_2$ | Fe | Ni |
|---|---|---|---|---|
| Concentrate | 25.3 | 0.8 | 32.6 | 0.5 |
| Hydrocyclone U/F | 35.3 | 2.5 | 28.6 | 0.2 |
| Unit: wt% | | | | |

The concentration could be achieved up to a concentration above the $Cr_2O_3$ grade of the chromite which was commercially available in the market. From this fact, it can be found that it is important that the cyclone classification is performed first to remove microparticles.

INDUSTRIAL APPLICABILITY

As is obvious from the above results, the hydrometallurgical process for nickel oxide ore of the present invention is suitable as a smelting method based on high pressure leaching that is used in the hydrometallurgical field of nickel oxide ore.

REFERENCE SIGNS LIST

8: Nickel oxide ore
9: Ore slurry
10: Leached slurry
11: Leachate
12: Leach residue slurry
14: Mother liquor (1)
15: Zinc sulfide precipitate
16: Mother liquor (2)
17: Ni-Co mixed sulfide
18: Barren liquor
19: Final neutralized residue
20: Tailings dam
22: Autoclave-supplied slurry
23: Chromite
26: Residue after step (B-1)
27: Treatment solution after step (B-2)
28: Hematite

**Claims**

1. A hydrometallurgical process for nickel oxide ore of recovering nickel and cobalt using a high pressure acid leaching that includes an ore processing step, a leaching step, a solid-liquid separation step, a neutralization step, a zinc removal step, a sulfurization step, and a final neutralization step, the process comprising at least one step selected from the following step (A), step (B-1), and step (B-2):

    Step (A): separating and recovering chromite particles in an ore slurry produced in the ore processing step, by a recovery process including a specific gravity separation;
    Step (B-1): neutralizing a leachate with a magnesium-based neutralizing agent, the leachate being produced by subjecting the ore slurry that has a chromium grade lowered through the step (A), to the leaching step and the solid-liquid separation step; and
    Step (B-2): neutralizing a leach residue slurry with a magnesium-based neutralizing agent to recover hematite particles, the leach residue slurry being produced by subjecting the ore slurry that has a chromium grade lowered through the step (A), to the leaching step and the solid-liquid separation step, .

2. A hydrometallurgical process for nickel oxide ore of recovering nickel and cobalt from nickel oxide ore using a high pressure acid leaching that includes an ore processing step, a leaching step, a solid-liquid separation step, a neutralization step, a zinc removal step, a sulfurization step, and a final neutralization step, the process comprising the following step (A), step (B-1), and step (B-2) :

    Step (A): separating and recovering chromite particles in an ore slurry produced in the ore processing step, by a recovery process including a specific gravity separation;
    Step (B-1): neutralizing a leachate with a magnesium-based neutralizing agent, the leachate being produced by subjecting the ore slurry that has a chromium grade lowered through the step (A), to the leaching step and the solid-liquid separation step; and
    Step (B-2): neutralizing a leach residue slurry with a magnesium-based neutralizing agent to recover hematite particles, the leach residue slurry being produced by subjecting the ore slurry that has a chromium grade lowered through the step (A), to the leaching step and the solid-liquid separation step.

3. The hydrometallurgical process for nickel oxide ore according to claim 1 or 2, wherein the recovery process of the step (A) includes subjecting the ore slurry to cyclone classification, reducing fine iron hydroxide particles, and then recovering chromite particles in the ore slurry from the ore slurry as a concentrate of chromite using the specific gravity separation.

4. The hydrometallurgical process for nickel oxide ore according to claim 3, wherein the recovery process of the step (A) includes performing cyclone classification without diluting a slurry concentration of the ore slurry.

5. The hydrometallurgical process for nickel oxide ore according to claim 1 or 2, wherein the recovery process of the step (A) includes collecting chromite into an underflow in cyclone classification in the entire amount except for unavoidable losses.

6. The hydrometallurgical process for nickel oxide ore according to claim 1 or 2, wherein the specific gravity separation includes at least one step of selected from a step of using a density separator and a step of using a spiral concentrator.

7. The hydrometallurgical process for nickel oxide ore according to claim 6, wherein the step of using the density separator is performed two times or more on the slurry concentrated, using the density separator.

8. The hydrometallurgical process for nickel oxide ore according to claim 6, wherein the step of using the spiral concentrator is performed two times or more on the slurry concentrated, using the spiral concentrator.

9. The hydrometallurgical process for nickel oxide ore according to claim 6, wherein a pulp content of the slurry supplied to the spiral concentrator is 15 wt% solids to 35 wt% solids.

10. The hydrometallurgical process for nickel oxide ore according to claim 6, wherein an amount of teeter water supplied to the density separator is 0.5 to 7.0 $[m^3 \cdot h^{-1}/m^2]$.

11. The hydrometallurgical process for nickel oxide ore according to claim 1 or 2, wherein after the specific gravity separation, the slurry is subjected to a magnetic separation, which is a physical separation, to remove magnetite so as to recover non-magnetized material as a chromite concentrate.

12. The hydrometallurgical process for nickel oxide ore according to claim 1 or 2, wherein in the step (B-2), a pH of the leach residue slurry neutralized is adjusted to be in a range of 4 to 7, and final neutralization is then carried out using an alkali other than a magnesium-based neutralizing agent.

13. The hydrometallurgical process for nickel oxide ore according to claim 1 or 2, wherein in the step (B-2), the leach residue slurry or a neutralized residue slurry including the leach residue slurry is subjected to cyclone classification, and a fine particle portion thus classified is recovered as a concentrate of hematite.

14. The hydrometallurgical process for nickel oxide ore according to claim 1 or 2, wherein the ore processing step is a step of performing removal of foreign material in mined raw material ore and adjustment of a particle size of the ore to form ore slurry;
the leaching step is a step of adding sulfuric acid to the ore slurry and stirring the mixture at a high temperature and a high pressure to form a leached slurry composed of a leach residue and the leachate;
the solid-liquid separation step is a step of washing the leached slurry in multiple stages to obtain the leachate containing nickel and cobalt, and the leach residue slurry;
the neutralization step is a step of adding an alkali to the leachate to form a neutralized precipitate slurry containing trivalent iron, and a mother liquor for nickel recovery;
the zinc removal step is a step of blowing in hydrogen sulfide gas into the mother liquor to form a zinc sulfide precipitate slurry and a mother liquor for nickel and cobalt recovery;
the sulfurization step is a step of blowing in hydrogen sulfide into the mother liquor for nickel and cobalt recovery, and producing a mixed sulfide containing nickel and cobalt, and a barren liquor; and
the final neutralization step is a step of adding an excess of the barren liquor to the leach residue slurry and adjusting the pH of the mixture to be in a range of 8 to 9, to obtain a final neutralized residue.

15. The hydrometallurgical process for nickel oxide ore according to claim 1 or 2, wherein adjustment of a particle size of the ore in the ore processing step is carried out by screening to a particle size of 2 mm or less.

**16.** The hydrometallurgical process for nickel oxide ore according to claim 1 or 2, wherein a grade of chromium(III) oxide in concentrated chromite is 41 wt% or more.

FIG.1

F I G . 2

FIG.3

ORE SLURRY
↓
```
┌─────────────────┐
│   HYDROCYCLONE  │
└─────────────────┘
```

HYDROCYCLONE U/F        HYDROCYCLONE O/F

```
┌─────────────────┐
│     DENSITY     │      [2] TO LEACHING STEP
│  SEPARATOR (1)  │
└─────────────────┘
```

DENSITY                    DENSITY
SEPARATOR U/F (1)         SEPARATOR O/F

                          [2] TO LEACHING STEP

```
┌─────────────────┐
│     SPIRAL      │
│ CONCENTRATOR (1)│
└─────────────────┘
```

Concentrate (1)      Middling (1)          Tailing (1)

                  [2] TO LEACHING STEP   [2] TO LEACHING STEP

FEED

```
┌──────────────────────────┐
│   LOW-MAGNETIC FIELD     │
│ MAGNETIC CONCENTRATION   │
└──────────────────────────┘
```

Mag                      Non-Mag

[2] TO LEACHING STEP     CHROMITE (PRODUCT)

FIG.4

ORE SLURRY

HYDROCYCLONE

HYDROCYCLONE U/F          HYDROCYCLONE O/F

                          [2] TO LEACHING STEP

DENSITY
SEPARATOR (1)

DENSITY                   DENSITY
SEPARATOR U/F (1)         SEPARATOR O/F

DENSITY                   [2] TO LEACHING STEP
SEPARATOR (2)

DENSITY                   DENSITY
SEPARATOR U/F (2)         SEPARATOR O/F

SPIRAL                    [2] TO LEACHING STEP
CONCENTRATOR (1)

Concentrate (1)     Middling (1)          Tailing (1)

                    SPIRAL                [2] TO LEACHING STEP
                    CONCENTRATOR (2)

                    Concentrate (2)       Middling (2)
                                          Tailing (2)

FEED                                      [2] TO LEACHING STEP

LOW-MAGNETIC FIELD
MAGNETIC CONCENTRATION

Mag                 Non-Mag

[2] TO LEACHING STEP   CHROMITE (PRODUCT)

FIG.5

ORE SLURRY

HYDROCYCLONE

HYDROCYCLONE U/F          HYDROCYCLONE O/F

HIGH-MESH
SEPARATOR               TO LEACHING STEP

HIGH-MESH                HIGH-MESH
SEPARATOR U/F            SEPARATOR O/F

CHROMITE CONCENTRATE     TO LEACHING STEP

FIG.6

ORE SLURRY
↓
```
┌─────────────────┐
│    DENSITY      │
│ SEPARATOR (1)   │
└─────────────────┘
```

DENSITY
SEPARATOR U/F (1)

DENSITY
SEPARATOR O/F
↓
TO LEACHING STEP

```
┌─────────────────┐
│    SPIRAL       │
│ CONCENTRATOR (1)│
└─────────────────┘
```

Concentrate (1)　　　Middling (1)　　　Tailing (1)

TO LEACHING STEP　　TO LEACHING STEP

```
┌─────────────────┐
│  HYDROCYCLONE   │
└─────────────────┘
```

HYDROCYCLONE U/F　　　HYDROCYCLONE O/F

TO LEACHING STEP

CHROMITE CONCENTRATE

<div align="center">

**INTERNATIONAL SEARCH REPORT**

</div>

| International application No. |
|---|
| PCT/JP2014/060611 |

**A. CLASSIFICATION OF SUBJECT MATTER**
*C22B23/00*(2006.01)i, *C22B3/00*(2006.01)i, *C22B3/04*(2006.01)i, *C22B34/32* (2006.01)i

According to International Patent Classification (IPC) or to both national classification and IPC

**B. FIELDS SEARCHED**

Minimum documentation searched (classification system followed by classification symbols)
C22B23/00, C22B3/00, C22B3/04, C22B34/32

Documentation searched other than minimum documentation to the extent that such documents are included in the fields searched
Jitsuyo Shinan Koho          1922–1996    Jitsuyo Shinan Toroku Koho    1996–2014
Kokai Jitsuyo Shinan Koho    1971–2014    Toroku Jitsuyo Shinan Koho    1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-107289 A (Sumitomo Metal Mining Co., Ltd.), 07 June 2012 (07.06.2012), entire text; all drawings (Family: none) | 1-16 |
| A | JP 2010-095788 A (Sumitomo Metal Mining Co., Ltd.), 30 April 2010 (30.04.2010), entire text; all drawings & AU 2009212947 A    & CA 2678724 A1 | 1-16 |
| P,X | JP 2013-095971 A (Sumitomo Metal Mining Co., Ltd.), 20 May 2013 (20.05.2013), entire text; all drawings (Family: none) | 1-6,9-16 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 09 June, 2014 (09.06.14) | Date of mailing of the international search report 17 June, 2014 (17.06.14) |
|---|---|
| Name and mailing address of the ISA/ Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6116660 A
- JP 2005350766 A
- JP 2010095788 A